# EUROPÄISCHE PATENTANMELDUNG

(11) **EP 1 544 713 A2**
(43) Veröffentlichungstag der Anmeldung: **22.06.2005**
(21) Anmeldenummer: 04003660.0
(22) Anmeldetag: 18.02.2004
(51) Int. Cl.: G06F 1/16

(54) **TV-Modul für einen tragbaren Computer**

(30) Priorität: 17.12.2003 DE 20319622 U
(71) Anmelder: Medion AG, 45127 Essen (DE)
(72) Erfinder: Soellner, Oliver, 61476 Kronberg (DE); Jendrzok, Mark, 61350 Bad Homburg (DE)
(74) Vertreter: Grünecker, Kinkeldey, Stockmair & Schwanhäusser Anwaltssozietät

(57) **Zusammenfassung**

Die Erfindung betrifft einen tragbaren Computer und ein TV-Modul, das in einen Wechselschacht für Speicherlaufwerke eines tragbaren Computers einsetzbar ist.

## Beschreibung

Die Erfindung betrifft ein TV-Modul als Wechseleinsatz für einen tragbaren Computer. Weiterhin betrifft die Erfindung einen tragbaren Computer, der ein TV-Modul als Wechseleinsatz anstelle eines Speicherlaufwerks aufnehmen kann.

Tragbare Personal-Computer (PC) finden zunehmende Verbreitung. Trotz eines gegenüber herkömmlichen PCs deutlich verminderten Platzangebots stehen die tragbaren Computer (Notebooks) Desktop-PCs in ihrer Funktionalität kaum nach.

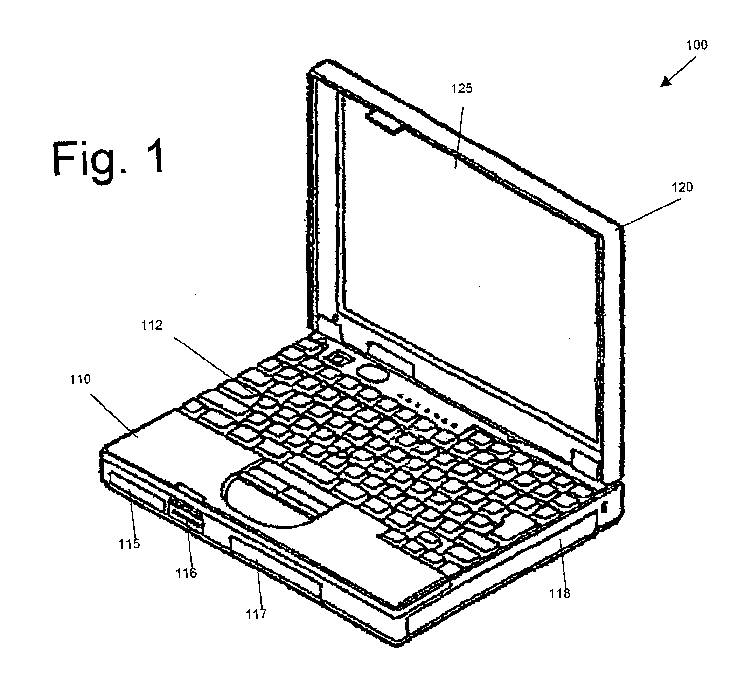

Ein Beispiel für einen solchen tragbaren Computer, nämlich ein Notebook-Computer, ist in Fig. 1 dargestellt. Der tragbare Computer 100 umfasst ein Gehäuse 110 und einen über ein Scharnier mit dem Gehäuse 110 verbundenen Deckel 120, in dem ein Flachbildschirm 125 angeordnet ist. Das Gehäuse 110 besitzt auf seiner Oberseite eine Tastatur 112 und weitere Eingabemöglichkeiten wie beispielsweise ein Touch-Pad. Seitlich an dem Gehäuse ist eine Mehrzahl von Erweiterungs- und Anschlussmöglichkeiten 115-118 zu erkennen. Der Steckplatz 115 dient zur Aufnahme einer PCMCIA-Karte. Der dazu benachbarte Steckplatz 116 kann eine Mehrzahl unterschiedlicher Speicherkartenformate aufnehmen, wie sie in Digitalkameras immer größere Verbreitung finden. Über den mit 117 bezeichneten Steckplatz kann beispielsweise die Festplatte des tragbaren Computers ausgetauscht werden.

Zusätzlich weist der tragbare Computer 100 einen seitlich angeordneten Wechselschacht 118 auf. Dieser Wechselschacht dient zur Aufnahme verschiedener Speicherlaufwerke, beispielsweise eines CD-ROM-Laufwerks, eines DVD-Laufwerks, eines Diskettenlaufwerks oder einer zusätzlichen Festplatte. Die wahlweise in den Wechselschacht 118 einsetzbaren PC-Komponenten besitzen ein Gehäuse, das auf den vom Wechselschacht 118 bereitgestellten Einbauplatz abgestimmt ist und genau in die Öffnung des Wechselschachts passt. Den Austausch einer solchen wahlweise einsetzbaren PC-Komponente kann der Benutzer selbst mit wenigen Handgriffen erledigen. Auf diese Weise ist die Speicherkapazität des tragbaren Computers und die Fähigkeit zur Wiedergabe von Speichermedien immer an die aktuellen Bedürfnisse anpassbar.

Im Gegensatz zu tragbaren Computern ist die Verwendung von Wechselschächten für Speicherlaufwerke bei Desktop-Computern ungebräuchlich. Ein Desktop-Computer weist in ausreichendem Maß zur Verfügung stehenden Einbauplatz auf, so dass bei einem Desktop-Computer ohne weiteres mehrere Speicherlaufwerke gleichzeitig in seinem Gehäuse montiert werden können.

Zusätzliche Funktionalität kann in einfacher Weise über vordefinierte Steckplätze innerhalb des vorhandenen Einbauplatzes in den Desktop-Computer integriert werden. Zu diesem Zweck wird in einen dieser Steckplätze eine Platine eingesetzt, die dem Computer die gewünschte zusätzliche Funktionalität verleiht. Die Steckplätze besitzen vordefinierte mechanische Parameter, d.h. einen Formfaktor, und eine elektrische Schnittstelle, über die sie beim Einstecken mit dem PCI-Bus des Computers verbunden werden und so von der CPU ansteuerbar sind.

Immer größere Verbreitung finden TV-Steckkarten mit denen ein PC zu einem Fernseher aufgerüstet werden kann. Die TV-Karte empfängt dazu ein Antennensignal über einen externen Anschluss, verarbeitet das empfangene Signal auf der TV-Steckkarte und gibt das Fernsehbild über den Monitor des Desktop-PCs wieder.

Die entsprechende Integration einer großen Anzahl von zusätzlichen Funktionen in einen tragbaren Computer, insbesondere einen Notebook-Computer, ist dagegen weitaus schwieriger zu erreichen. Um die leichte Transportierbarkeit zu ermöglichen, muss ein tragbarer Computer geringe Abmessungen bei gleichzeitig niedrigem Gewicht aufweisen. Jede zusätzliche Funktionalität, die in einen tragbaren Computer integriert ist, erhöht das Gewicht und die Abmessungen.

Um dieses Ziel einer leichten Transportierbarkeit des tragbaren Computers zu erreichen, sind die für einen Computer unverzichtbaren Komponenten mittlerweile in miniaturisierter Form entwickelt worden, beispielsweise die Festplatte. Außerdem ist auch der Betrieb des Prozessors für einen besonders stromsparenden Betrieb angepasst worden, beispielsweise mit der heutigen Generation von Mobil-Prozessoren, so dass ein kleinere und leichtere Batterie verwendet werden kann.

Die Integration zusätzlicher Funktionen, die nur sporadisch benötigt werden, kann durch Anschluss eines externen Gerätes an den tragbaren Computer erfolgen. Zur Vermeidung der umständlichen Handhabung, die sich durch wechselseitiges Anschließen der verschiedenen externe Geräte ergibt, werden immer mehr Module miniaturisiert und in dem Gehäuse des tragbaren Computers untergebracht. Die Erweiterung der Funktionalität eines tragbaren Computers ist jedoch im Allgemeinen nur auf Kosten eines erhöhten Gewichts und größerer Abmessungen erreichbar. Auf diese Weise kann ein Notebook auch zum Empfang von Fernsehsignalen und deren Wiedergabe auf dem Bildschirm aufgerüstet werden.

Aufgabe der Erfindung ist es, einen tragbaren Computer anzugeben, bei dem möglichst ohne Gewichtszunahme und Vergrößerung der Abmessungen die Funktionalität erweiterbar ist.

Diese Aufgabe wird mit den Merkmalen der unabhängigen Patentansprüche gelöst.

Gemäß einem ersten Aspekt der vorliegenden Erfindung wird ein TV-Modul als Wechseleinsatz für einen tragbaren Computer angegeben. Das TV-Modul ist in den Wechselschacht eines Speicherlaufwerks des Computers einsetzbar. Ein Steckanschluss dient zur elektrischen Verbindung des TV-Moduls mit dem Computer beim Einsetzen in den Wechselschacht.

Gemäß einem weiteren Aspekt wird ein tragbarer Computer mit einem Wechselschacht für Speicherlaufwerke angegeben. In dem Wechselschacht ist ein Steckanschluss zur elektrischen Verbindung eines in den Wechselschacht eingesetzten Speicherlaufwerks mit dem Computer vorgesehen. Ein weiterer in dem Wechselschacht angeordneter Steckanschluss dient zur elektrischen Verbindung eines in den Wechselschacht einsetzbaren TV-Moduls mit dem Computer.

Es ist der besondere Lösungsansatz der Erfindung, den Wechselschacht eines Speicherlaufwerks auch für ein TV-Modul zu verwenden. Zu diesem Zweck ist der Wechselschacht des tragbaren Computers mit einem zusätzlichen Stecker versehen, der auch einen Datenaustausch des Computers mit dem TV-Modul ermöglicht. Über eine solche Anpassung kann der Benutzer in einfacher Weise den tragbaren Computer je nach Anwendung für seine Bedürfnisse konfigurieren. Je nach Bedarf kann entweder ein DVD-Laufwerk, ein CD-Laufwerk, ein zusätzliches Festplattenlaufwerk oder das TV-Modul in den Wechselschacht des tragbaren Computers eingesetzt werden.

Es ist der besondere Vorteil dieser Lösung, dass der tragbare Computer die Fernsehwiedergabefunktionalität erreicht, ohne dass sich das Gewicht und die Größe des tragbaren Computers erhöhen.

Zu diesem Zweck entspricht das Gehäuse des TV-Moduls im Wesentlichen dem eines in den Wechselschacht einsetzbaren Speicherlaufwerks. Vorzugsweise ist jedoch an der Stelle, an der der tragbare Computer einen elektrischen Steckanschluss für das Speicherlaufwerk aufweist, eine Aussparung vorgesehen. Damit ist das TV-Modul trotz der unterschiedlichen Funktionalität "kompatibel" mit den vorgegebenen Platzverhältnissen.

Es ist ein weiterer Vorteil der Erfindung, dass die Stromaufnahme des tragbaren Computers gegenüber einem Computer vermindert ist, bei dem eine TV-Schaltung dauerhaft in das Gehäuse integriert ist. Eine solche fest eingebaute TV-Schaltung wird ständig mit Strom aus der Batterie des Computers versorgt, und zwar auch dann, wenn kein Fernsehbild auf der Anzeige des Computers wiedergegeben wird. Im Gegensatz dazu ist das TV-Modul der Erfindung aus dem Computer entnehmbar, so dass kein unnötiger Strom zur Versorgung nicht benötigter TV-Komponenten verbraucht wird. Die mobile Nutzungszeitspanne des tragbaren Computers kann somit bei gleicher Batteriekapazität verlängert werden. Alternativ kann eine kleinere Batterie mit geringerem Gewicht und kleineren Abmessungen eingesetzt werden, die eine gleiche mobile Nutzungsdauer ermöglicht.

Die Position des elektrischen Steckanschlusses für das TV-Modul unterscheidet sich von der Position eines Steckanschlusses für die einsetzbaren Speicherlaufwerke. Damit lassen sich die unterschiedlichen Anforderungen im Hinblick auf die verschiedenartigen Signale und Steuerungserfordernisse erfüllen.

Der elektrische Steckanschluss ist in dem Wechselschacht bzw. an dem Gehäuse des TV-Moduls so angeordnet, dass bei vollständigem Einsetzen des TV-Moduls in den Wechselschacht eine elektrische Verbindung hergestellt wird. So kann der Benutzer in einfacher Weise ohne umständliches Hantieren eine TV-Funktionalität in den tragbaren Computer integrieren.

Der Wechselschacht und das Gehäuse des TV-Moduls weisen im Wesentlichen eine L-Form auf. Dabei befindet sich der größere Teil des Volumens in dem deutlich breiter ausgebildeten längeren Schenkel. Der kürzere Schenkel mit geringerer Bautiefe nimmt vorzugsweise den Steckanschluss für das TV-Modul zur elektrischen Verbindung mit dem tragbaren Computer auf. Der Steckanschluss ist vorzugsweise zur Übertragung von Signalen gemäß dem USB-Standard ausgebildet. Gemäß einer bevorzugten Ausführungsform ist der Stecker gegenüber herkömmlichen USB-Standardsteckern mechanisch verstärkt ausgebildet, um eine sichere Kontaktierung auch bei stärkerer Beanspruchung sicherzustellen.

Gemäß einer alternativen Ausführungsform wird ein USB-Standardsignal verwendet. Zusätzlich sind separate Masse-Kontakte und Kontakte zur Übertragung von Audiosignalen vorgesehen.

Vorzugsweise ist das TV-Modul mit externen Anschlüssen versehen, die an der nach dem Einstecken des TV-Moduls in den Wechselschacht zugänglichen Außenseite angeordnet sind. Insbesondere umfassen diese Anschlüsse einen Antennenanschluss, einen S-Video-Anschluss, einen Audioanschluss und/oder einen Composite-Video-Anschluss.

Vorzugsweise ist der Antennenanschluss nicht mit einem standardgemäßen Antennenanschluss vorgesehen, sondern mit einem Stecker, dessen Durchmesser sehr viel kleiner ist. Auf diese Weise ist es möglich, die typische Bauhöhe des Wechselschachtes beizubehalten. Ein herkömmliches Antennenkabel ist in einfacher Weise mittels eines kurzen Adapterstücks anschließbar.

Bevorzugte Ausgestaltungen der Erfindung werden nachfolgend unter Bezugnahme auf die Figuren näher erläutert.
- Fig. 1: zeigt eine perspektivische Darstellung eines tragbaren Computers.
- Fig. 2: zeigt eine Aufsicht auf das erfindungsgemäße TV-Modul.
- Fig. 3: zeigt eine schematische Ansicht der Kontakte des in Fig. 2 gezeigten TV-Moduls.
- Fig. 4: zeigt eine perspektivische Ansicht auf die Außenseite des TV-Moduls mit Antennen-Adapterkabel.
- Fig. 5: zeigt eine perspektivische Ansicht der an dem TV-Modul vorgesehenen externen Anschlüsse.
- Fig. 6: zeigt eine beispielhafte Ausführungsform für einen Steckverbinder, der an dem TV-Modul vorgesehen ist, zur elektrischen (und mechanischen) Verbindung des TV-Moduls in dem Wechselschacht des tragbaren Computers gemäß der vorliegenden Erfindung.
- Fig. 7: zeigt eine beispielhafte Ausführungsform für einen Steckverbinder, der in dem Wechselschacht des Computers vorgesehen ist, zur elektrischen (und mechanischen) Verbindung des TV-Moduls in dem Wechselschacht des tragbaren Computers mit dem Steckverbinder des TV-Moduls gemäß Fig. 6.
- Fig. 8: zeigt eine perspektivische Aufsicht auf eine beispielhafte Ausführungsform einer Fernbedienung für die Steuerung der Funktionen des TV-Moduls gemäß der vorliegenden Erfindung.
- Fig. 9: zeigt eine perspektivische Ansicht der Unterseite der Fernbedienung aus Fig. 8 und des Computeradapters, der die Funksignale der Fernbedienung empfängt und dem tragbaren Computer zuführt, wobei der Computeradapter in einer entsprechenden Ausnehmung auf der Unterseite der Fernbedienung gehalten ist.
- Fig. 10: zeigt eine weitere perspektivische Ansicht der Unterseite der Fernbedienung der Fig. 8 und des Computeradapters, wobei der Computeradapter von der Fernbedienung getrennt ist.

Fig. 1 zeigt eine schematische Ansicht eines tragbaren Computers 100 mit einem Wechselschacht 118 für Speicherlaufwerke. Dieser Wechselschacht besitzt einen ersten elektrischen Steckkontakt zur Herstellung einer elektrischen Verbindung mit einem der einsteckbaren Speicherlaufwerke. Für die Speicherlaufwerke ist eine sogenannte IDE/ATAPI-Schnittstelle vorgesehen. Eine solche Schnittstelle unterstützt lediglich Speicherlaufwerke. Der Anschluss eines TV-Moduls über diese Schnittstelle ist daher nicht möglich.

Für den Anschluss eines in den Wechselschacht 118 einsetzbaren TV-Moduls ist ein weiterer Anschluss in dem Wechselschacht 118 vorgesehen. Dieser Stecker ermöglicht die Übertragung von Video- und Audiosignalen. Das lässt sich in einfacher Weise mit einer Schnittstelle gemäß dem USB-Standard, zusätzlichen Audiokontakten, sowie weiteren Masse-Kontakten erreichen.

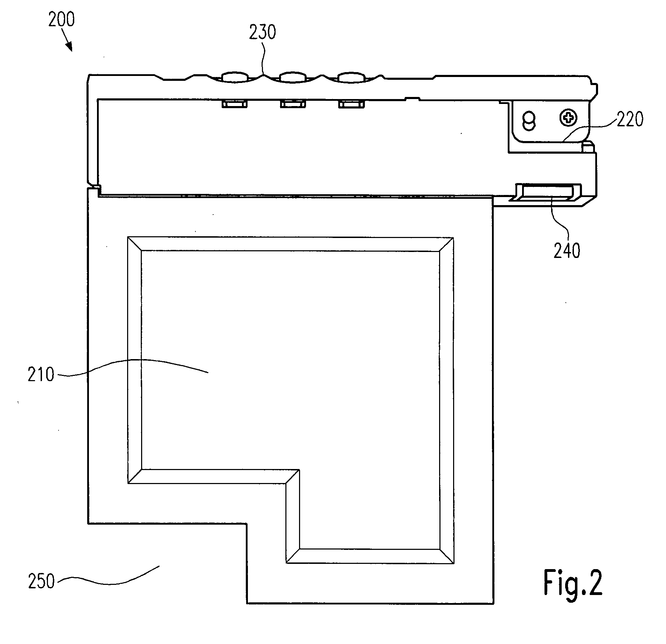

Eine Aufsicht auf ein in einen solchen Wechselschacht 118 einsetzbares TV-Modul 200 ist in Fig. 2 dargestellt. Das TV-Modul 200 besteht aus einem im Wesentlichen L-förmigen Gehäuse 210, 220, in dem die elektronische Schaltung untergebracht ist. An dem hinteren Ende des Gehäuses 210, das zuerst in den Wechselschacht 118 eingesetzt wird, ist eine Aussparung 250 vorgesehen. Diese Aussparung sitzt in etwa an der Stelle, an der sich in dem Wechselschacht 118 ein Steckkontakt für ein Speicherlaufwerk befindet.

In dem Bereich 220 des Gehäuses des TV-Moduls 200, der die geringere Bautiefe aufweist, befindet sich in Einsteckrichtung ein Steckkontakt 240. Über diesen Steckkontakt wird beim Einstecken des Moduls in den Wechselschacht 118 eine elektrische Verbindung zwischen dem TV-Modul 200 und dem tragbaren Computer 100 hergestellt. Über diesen Steckkontakt 240 werden die Audio- und Videodaten an den Computer geführt.

An der nach dem Einsetzen des Moduls einzigen von außen zugänglichen Seite des TV-Moduls ist eine Frontabdeckung 230 vorgesehen. Die Frontabdeckung passt das TV-Modul 200 farb- und formmäßig an die Gestaltung des tragbaren Computers 100 an. Auf diese Weise sind flache und runde Gestaltungen möglich.

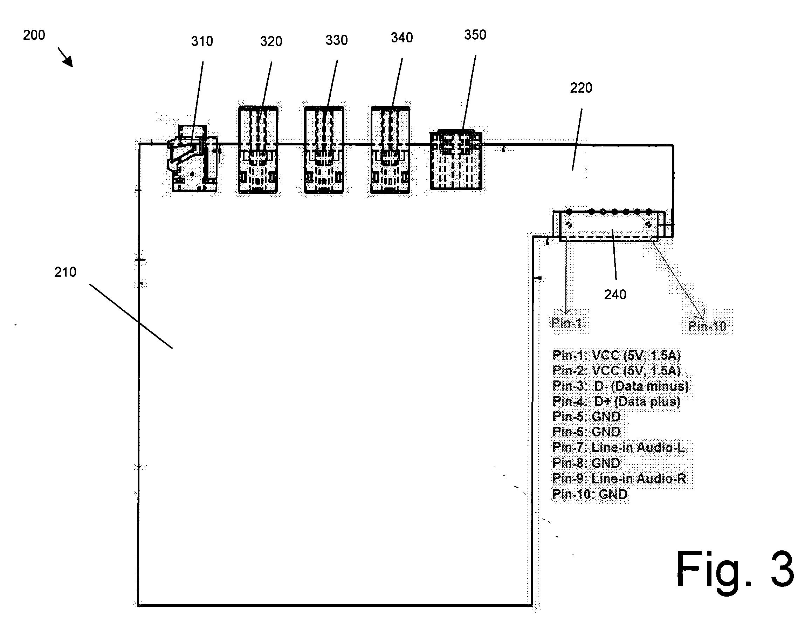

In der Frontblende 230 ist eine Mehrzahl von externen Anschlüssen vorgesehen. Die Anordnung der Anschlüsse des TV-Moduls 200 ist im Einzelnen in Fig. 3 schematisch dargestellt. Die externen Anschlüsse umfassen einen Antennenanschluss 310, zwei Audioanschlüsse 320, 330, einen Composite-Videosignal-Anschluss 340 und einen S-Video-Anschluss 350.

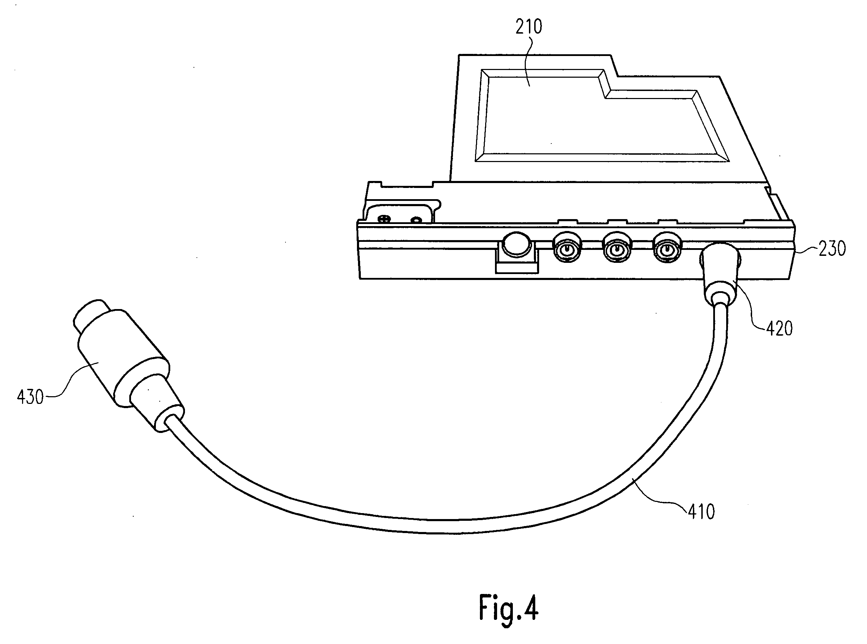

Eine perspektivische Ansicht der externen Anschlüsse ist in Fig. 4 wiedergegeben. Vorzugsweise sind alle Anschlüsse mit Ausnahme des Antennenanschlusses 310 gemäß einem üblichen Anschlussstandard ausgebildet. Um die Bauhöhe des TV-Moduls 200 und damit die des Wechselschachts 118 und des tragbaren Computers 100 nicht unnötig zu vergrößern, werden solche Stecker, die einen großen Durchmesser aufweisen, nicht standardmäßig ausgebildet. Aus diesem Grund ist der Antennenstecker 310 in einer Variante ausgebildet, die einen deutlich geringeren Durchmesser besitzt und damit eine flache Bauform des TV-Moduls 200 ermöglicht.

Um das TV-Modul 200 mit einem Antennensignal versorgen zu können, wird vorzugsweise ein Adapterkabel 410 verwendet. Dieses Adapterkabel besitzt an einem Ende einen Stecker 420, der mit dem Anschluss 310 in dem TV-Modul 200 verbindbar ist. An seinem anderen Ende ist ein Stecker 430 vorgesehen, der den standardgemäßen deutlich größeren Durchmesser besitzt. Auf diese Weise kann das TV-Modul an ein herkömmliches Antennenkabel angeschlossen werden.

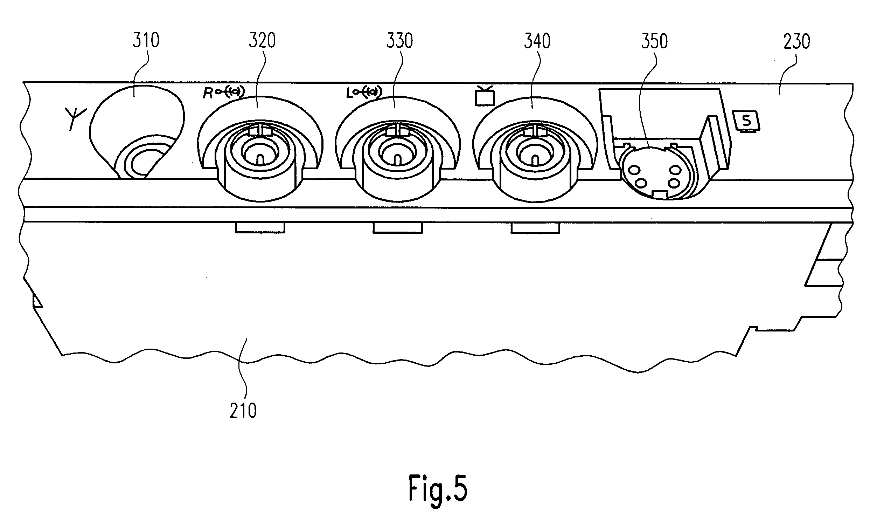

Eine besonders vorteilhafte Gestaltung und Anordnung der externen Anschlüsse ist in Fig. 5 wiedergegeben.

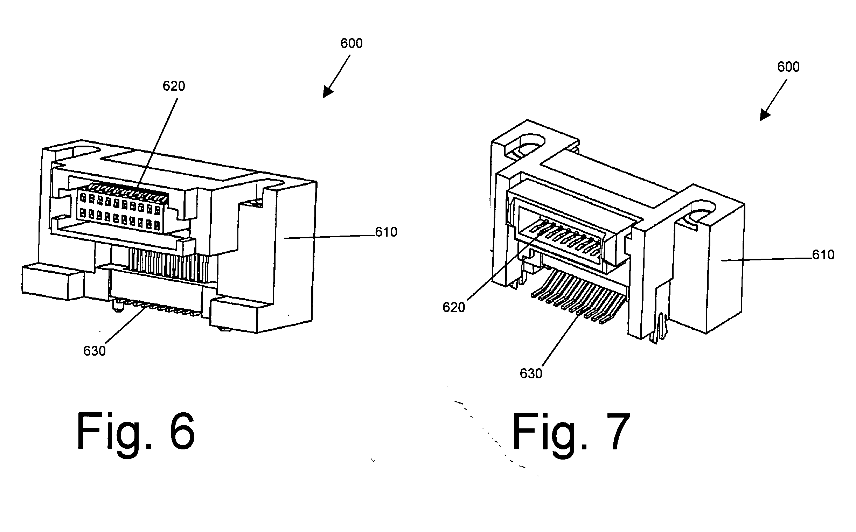

Eine mögliche Gestaltung für die Steckverbinder für die elektrische Verbindung von TV-Modul 200 und tragbarem Computer 100 in dem Wechselschacht 118 ist in Figuren 6 und 7 wiedergegeben. Jeweils einer dieser Kontakte ist in dem Wechselschacht 118 und in dem TV-Modul 200 montiert. Für eine mechanisch-stabile Verbindung, die auch größere Kräfte aufnehmen kann, wird eine zweireihige Steckeranordnung mit jeweils acht Kontakten pro Reihe verwendet. Vorzugsweise ist der in Fig. 6 gezeigte Steckverbinder an dem TV-Modul vorgesehen und der in Fig. 7 gezeigte Steckverbinder in dem Wechselschacht des tragbaren Computers.

Insgesamt sind 16 Kontakte für die elektrische Verbindung von TV-Modul und tragbarem Computer vorgesehen. Zwei Kontakte dienen zur Spannungsversorgung, zwei zur Übertragung von Video- und Steuerdaten und zwei zur Übertragung von Stereo-Audiodaten. Die verbleibenden Kontakte sind mit Masse belegt.

Um eine sichere Fixierung des TV-Moduls in dem Gehäuse zu ermöglichen, weist die Öffnung des Wechselschachts 118 mechanische Arretierungsmittel auf. Zur Arretierung wird beispielsweise eine Federklemme oder ein Schiebeschalter verwendet, die nach dem Einsetzen des Moduls in einfacher Weise ein Herausrutschen des Moduls aus dem Wechselschacht verhindern. Wie in Fig. 6 und Fig. 7 gezeigt, ist der Steckkontakt so ausgebildet, dass er neben einer elektrischen Verbindung auch eine mechanische Verbindung bewirkt, so dass das TV-Modul in dem Wechselschacht gehalten wird.

Um eine bessere Bedienbarkeit des TV-Moduls für den Benutzer zu ermöglichen, ist das TV-Modul über eine separate Fernbedienung steuerbar. Zu diesem Zweck wird vorzugsweise eine Funkfernbedienung verwendet, da ein Sichtkontakt zu dem Wechselschacht bei der Benutzung des tragbaren Computers als Fernsehgerät im Allgemeinen nicht besteht. Über die Fernbedienung lassen sich alle üblichen Funktionen eines Fernsehgeräts steuern.

Gemäß einer besonderen Ausführungsform der vorliegenden Erfindung ist die Funkfernsteuerung so gestaltet, dass sie auch separat benutzbar ist, d.h. nicht für das TV-Modul. Die Fernbedienung dient nicht nur zur Steuerung der Fernsehfunktionen, sondern kann auch zur Steuerung einer Vielzahl anderer Funktionen des Computers verwendet werden. Zu diesem Zweck weist die Fernsteuerung Steuerungsmittel für einen Cursor und für Funktionstasten auf. Auf diese Weise kann der Benutzer auch aus größerer Entfernung durch die Programme seines Computers navigieren.

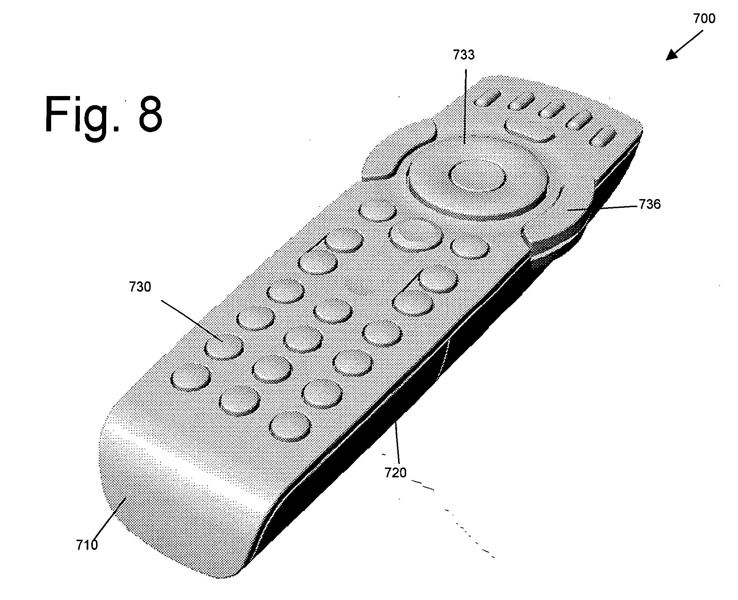

Eine perspektivische Aufsicht auf die Oberseite einer beispielhaften Ausführungsform einer solchen Fernbedienung ist in Fig. 8 gezeigt. Die Fernbedienung 700 besitzt ein vorzugsweise aus Kunststoff hergestelltes Gehäuse. Das Kunststoffgehäuse umfasst eine Oberschale 710 und eine vorzugsweise mehrteilig ausgebildete Unterschale 720. Ein abnehmbarer Abschnitt der Unterschale 720 ermöglicht das Einsetzen und den Austausch von Batterien zum Betrieb der Fernbedienung. Auf der Oberseite ist zur Steuerung des TV-Moduls 200 und des tragbaren Computers 100 eine Vielzahl verschiedener Tasten 730, 733, 736 angeordnet.

Über die am oberen Ende der Fernbedienung vorgesehenen Tasten, den sogenannten Funktionstasten, können verschiedene Funktionen des Notebooks aufgerufen werden. Die übrigen Tasten der Fernbedienung dienen anschließend zur entsprechenden Steuerung des über die Funktionstasten gewählten Anwendungsbereichs. Beispielhafte Anwendungsbereiche sind die Fernsehwiedergabe, eine DVD-Wiedergabe, eine Musikwiedergabe, eine Bildwiedergabe und ein Präsentationsmodus.

Während die Bedienung der Fernsehfunktionen entsprechend zur Bedienung einer herkömmlichen Fernseh-Fernbedienung funktioniert, sind zur Steuerung des Computers zusätzliche Tasten vorgesehen, insbesondere eine Mehrwege-Navigationstaste 733, vorzugsweise eine Acht-Wege-Navigationstaste. In der Funktionsart "PC" wird eine Maussteuerung des Betriebssystems oder eine Steuerung mit Hilfe eines Touch-Pads über die Betätigung der Acht-Wege-Navigationstaste simuliert. In einer vereinfachten Ausführungsform kann die Anzahl der über die Mehrwege-Navigationstaste 733 auswählbaren Richtungen kleiner als acht sein, beispielsweise vier.

Vorzugsweise ist die Mehrwege-Navigationstaste 733, wie in Fig. 8 gezeigt, ringförmig ausgestaltet. Innerhalb der Navigationstaste 733 ist eine weitere Taste angeordnet, über die eine mit der Navigationstaste getroffene Auswahl auf dem Bildschirm bestätigt wird. Diese Funktion entspricht der herkömmlichen Funktion der linken Maustaste für eine PC-Steuerung. Alternativ können die Funktionen der linken und der rechten Maustaste mit Hilfe der seitlich zur Navigationstaste 733 angeordneten Tasten 736 realisiert werden.

Über die Funktionstasten am oberen Ende der Fernbedienung 700 lassen sich spezielle Funktionen des Computers aufrufen, die an die Fernbedienung der vorliegenden Erfindung angepasst sind. Mit der Acht-Wege-Navigationstaste 733 der Fernbedienung lassen sich zusätzlich auch solche Bildschirmfunktionen bedienen, die einer Fernbedienung durch den Benutzer sonst nicht zugänglich sind, und zwar aufgrund nicht an die Fernbedienung der vorliegenden Erfindung angepasster Software. Beispielsweise lassen sich erfindungsgemäß beliebige andere Programme steuern, beispielsweise PowerPoint-Präsentationen und der Windows MediaPlayer.

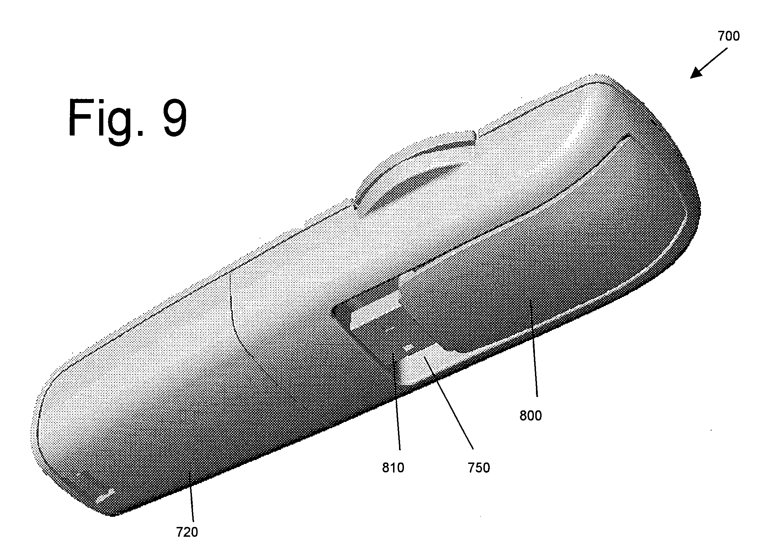

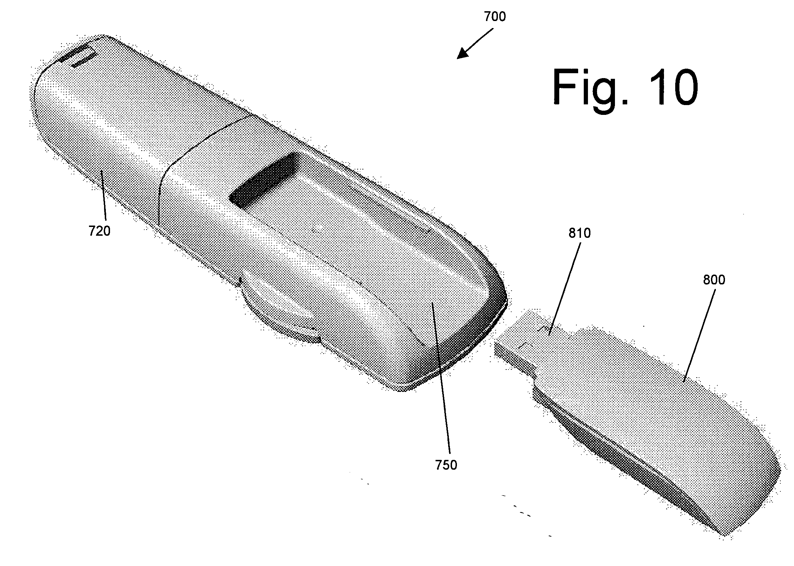

Eine weitere Besonderheit der Fernbedienung der vorliegenden Erfindung ist in den Figuren 9 und 10 wiedergegeben. Beide Figuren zeigen eine perspektivische Ansicht der Unterseite der Fernbedienung 700.

Die Fernbedienung 700 ist vorzugsweise eine Funkfernbedienung. Über ein Funksignal, vorzugsweise im Bereich von 433 MHz, werden Steuersignale von der Fernbedienung 700 zu dem tragbaren Computer 100 übertragen. Gemäß einer ersten bevorzugten Ausführungsform der Erfindung ist der Empfänger für die Funkfernbedienung in das TV-Modul 200 integriert. Um eine Abschirmung durch den tragbaren Computer zu vermeiden, ist die Antenne der Empfangseinheit in dem TV-Modul vorzugsweise in oder im Bereich der äußeren Abdeckung 230 des TV-Moduls angeordnet.

Gemäß einer zweiten bevorzugten Ausführungsform ist ein separates Empfangsmodul oder Computeradapter 800 vorgesehen. Dieses Modul wird in einen außen an dem tragbaren Computer vorgesehenen Steckplatz eingesteckt und damit elektrisch und mechanisch mit dem tragbaren Computer 100 verbunden. Vorzugsweise weist das Computeradapter 800 einen aus dem Computeradapter herausragenden Stecker 810 auf, der gemäß dem USB-Standard ausgebildet ist.

Um die Transportierbarkeit des tragbaren Computers 100 und der Fernbedienung 700 durch eine zusätzliche, außen am Computer befestigbare Empfangseinheit 800 nicht zu beeinträchtigen, ist das Empfangsmodul 800 so ausgestaltet, dass es beim Transport in das Gehäuse der Fernbedienung 700 integrierbar ist. Das Empfangsmodul 800 wird dabei mechanisch fest in der Ausnehmung 750 der Fernbedienung 700 gehalten, so dass außer der Fernbedienung und dem tragbaren Computer (mit dem TV-Modul) keine weitere Komponente zu transportieren ist. Über die Mitnahme der Fernbedienung 700 ist gleichzeitig das Empfangsmodul 800 transportierbar.

Bei Benutzung der Fernbedienung wird das Empfangsmodul 800 aus der auf der Unterseite der Fernbedienung 700 vorgesehenen Ausnehmung 750 herausgenommen und in einen freien USB-Port des tragbaren Computers eingesetzt. Auf diese Weise ist eine bequeme Fernbedienung der TV- und Computer-Funktionen möglich, ohne dass Hindernisse zwischen der Fernbedienung und dem Computer den Empfang und damit die Fernsteuerbarkeit behindern.

Gemäß einer weiter bevorzugten Ausführungsform sind in das TV-Modul 200 weitere Funktionen integriert, insbesondere der Empfang von FM-Rundfunk- und/oder Videotext.

Vorzugsweise ist das TV-Modul 200 für den Empfang von analog und digital ausgestrahlten Fernsehsignalen eingerichtet. Besonders vorteilhaft ist während des bis vermutlich 2007 andauernden Umstellungsprozesses von mobilem analogen Fernsehempfang auf flächendeckend digitalen terrestrischen Fernsehempfang (DVB-T) ein TV-Modul mit einer solchen hybriden Empfangseinheit. Je nach Empfangsbedingungen kann das TV-Modul 200 sowohl digitalen, nicht schnurgebundenen TV-Empfang nutzen, gewährleistet jedoch weiterhin auch den analogen Empfang in zunächst nicht DVB-T unterstützten Gebieten durch eine herkömmliche Verbindung an eine Antenne oder einen Kabelanschluss.

Zusammenfassend betrifft die Erfindung einen tragbaren Computer und ein TV-Modul, das in einen Wechselschacht für Speicherlaufwerke eines tragbaren Computers einsetzbar ist.

## Patentansprüche

1. TV-Modul als Wechseleinsatz für einen tragbaren Computer (100), das in den Wechselschacht (118) eines Speicherlaufwerks des Computers (100) einsetzbar ist, mit einem Steckanschluss (240) zur elektrischen Verbindung mit dem Computer (100) beim Einsetzen des TV-Moduls in den Wechselschacht (118).

2. TV-Modul nach Anspruch 1, wobei der Steckanschluss (240) an einer Position an dem TV-Modul vorgesehen ist, die sich von der eines Steckanschlusses von in den Wechselschacht einsetzbaren Speicherlaufwerken unterscheidet.

3. TV-Modul nach Anspruch 1 oder 2, wobei der Steckanschluss (240) an der Seite des Gehäuses (210, 220) des TV-Moduls vorgesehen ist, die beim Einsetzen des TV-Moduls in Einsetzrichtung vorne liegt.

4. TV-Modul nach einem der Ansprüche 1 bis 3 mit einem im Wesentlichen L-förmigen Gehäuse (210, 220).

5. TV-Modul nach Anspruch 4, wobei der Steckanschluss (240) an dem Abschnitt des Gehäuses (220) mit geringerer Bautiefe vorgesehen ist.

6. TV-Modul nach einem der Ansprüche 1 bis 5, wobei der Steckanschluss (240) zur Übertragung der Signale eines USB-Anschlusses ausgebildet ist.

7. TV-Modul nach Anspruch 6, wobei der Steckanschluss (240) zusätzlich zur Übertragung von Audiosignalen ausgebildet ist.

8. TV-Modul nach Anspruch 6 oder 7, wobei der Steckanschluss (240) außerdem einen Erdungskontakt aufweist.

9. TV-Modul nach einem der Ansprüche 6 bis 8, wobei der Steckanschluss (240) ein einziges Steckergehäuse für alle Kontakte umfasst.

10. TV-Modul nach Anspruch 9, wobei das Steckergehäuse 16 Kontakte umfasst.

11. TV-Modul nach einem der Ansprüche 6 bis 8, wobei der Steckanschluss (240) wenigstens zwei separate Stecker umfasst.

12. TV-Modul nach Anspruch 11, wobei einer der Stecker gemäß dem USB-Standard ausgebildet ist.

13. TV-Modul nach einem der Ansprüche 1 bis 12 mit externen Anschlüssen (310-350), die auf der nach dem Einsetzen des TV-Moduls von außen zugänglich verbleibenden Außenseite (230) des Gehäuses (210, 220) angeordnet sind.

14. TV-Modul nach Anspruch 13, wobei die auf der Außenseite (230) angeordneten Anschlüsse (310-350) wenigstens einen S-Video-Anschluss (350), einen Audio-Anschluss (320, 330), einen Composite-Video-Anschluss (340) und/oder einen Antennen-Anschluss (310) umfassen.

15. TV-Modul nach einem der Ansprüche 1 bis 14, wobei das Gehäuse des TV-Moduls im Wesentlichen dem eines in den Wechselschacht (118) einsetzbaren Speicherlaufwerks entspricht.

16. TV-Modul nach Anspruch 15, wobei das Gehäuse des TV-Moduls an der Stelle, an der im Wechselschacht (118) der elektrische Stecker für ein Speicherlaufwerk vorgesehen ist, eine Aussparung (250) aufweist.

17. TV-Modul nach einem der Ansprüche 1 bis 16, wobei das TV-Modul eine Fernsteuerungseinheit umfasst, die eine Steuerung der TV-Funktionen über eine separate Fernbedienung ermöglicht.

18. TV-Modul nach Anspruch 17, wobei die Fernsteuerungseinheit außerdem die Steuerung von Computerfunktionen über die Fernbedienung ermöglicht.

19. TV-Modul nach Anspruch 17 oder 18, mit einer Fernsteuerungseinheit, die eine Fernbedienung (700) und einen Computeradapter (800) umfasst, wobei der Computeradapter (800) mit dem tragbaren Computer (100) mechanisch und elektrisch verbindbar ist.

20. TV-Modul nach Anspruch 19, wobei der Computeradapter (800) über einen aus dem Computeradapter herausragenden Stecker (810).fest mit dem Computer (100) verbindbar ist.

21. TV-Modul nach Anspruch 19 oder 20, wobei die Fernbedienung (700) eine Vertiefung (750) zur Aufnahme des Computeradapters (800) aufweist.

22. TV-Modul nach einem der Ansprüche 1 bis 21, das zum Empfang von digital und von analog ausgestrahltem Fernsehen eingerichtet ist.

23. TV-Modul nach einem der Ansprüche 1 bis 22, das zusätzlich für den Empfang von Rundfunk, insbesondere von FM-Rundfunk, eingerichtet ist.

24. Tragbarer Computer mit einem Wechselschacht (118) für Speicherlaufwerke, in dem ein Steckanschluss zur elektrischen Verbindung eines in den Wechselschacht (118) eingesetzten Speicherlaufwerks mit dem Computer vorgesehen ist,
**gekennzeichnet durch**
einen weiteren in dem Wechselschacht (118) angeordneten Steckanschluss zur elektrischen Verbindung eines in den Wechselschacht eingesetzten TV-Moduls (200) mit dem Computer.

25. Tragbarer Computer nach Anspruch 24, wobei der Steckanschluss für das einsetzbare TV-Modul (200) an einer Position in dem Wechselschacht (118) vorgesehen ist, die sich von der eines Steckanschlusses von in den Wechselschacht (118) einsetzbaren Speicherlaufwerken unterscheidet.

26. Tragbarer Computer nach Anspruch 24 oder 25, wobei der Steckanschluss für das einsetzbare TV-Modul (240) an der Seite des Wechselschachts (118) vorgesehen ist, die der Öffnung des Wechselschachts (118) gegenüber liegt.

27. Tragbarer Computer nach einem der Ansprüche 24 bis 26, wobei die Breite des Wechselschachts (118) in Einsetzrichtung zur Aufnahme eines im Wesentlichen L-förmig ausgebildeten Gehäuses abnimmt.

28. Tragbarer Computer nach Anspruch 27, wobei der Steckanschluss für das einsetzbare TV-Modul (200) an dem Abschnitt des Wechselschachts (118) mit geringerer Tiefe vorgesehen ist.

29. Tragbarer Computer nach einem der Ansprüche 24 bis 28, wobei der Steckanschluss für das einsetzbare TV-Modul (200) zur Übertragung der Signale eines USB-Anschlusses ausgebildet ist.

30. Tragbarer Computer nach Anspruch 29, wobei der Steckanschluss für das einsetzbare TV-Modul (200) zusätzlich zur Übertragung von Audiosignalen ausgebildet ist.

31. Tragbarer Computer nach Anspruch 29 oder 30, wobei der Steckanschluss außerdem einen Erdungskontakt aufweist.

32. Tragbarer Computer nach einem der Ansprüche 29 bis 31, wobei der Steckanschluss für das einsetzbare TV-Modul (200) ein einziges Steckergehäuse für alle Kontakte umfasst.

33. Tragbarer Computer nach Anspruch 32, wobei das Steckergehäuse für das einsetzbare TV-Modul (200) 16 Kontakte umfasst.

34. Tragbarer Computer nach einem der Ansprüche 29 bis 31, wobei der Steckanschluss für das einsetzbare TV-Modul (200) wenigstens zwei separate Stecker umfasst.

35. Tragbarer Computer nach Anspruch 34, wobei einer der Stecker gemäß dem USB-Standard ausgebildet ist.

36. Tragbarer Computer nach einem der Ansprüche 24 bis 35, wobei der Computer so angepasst ist, dass er über eine in das TV-Modul (200) integrierte Fernsteuereinheit zur Bedienung des Computers über eine separate Fernbedienung (700) ausgebildet ist.

37. Tragbarer Computer nach einem der Ansprüche 24 bis 35 mit einem an der Außenseite vorgesehenen Steckkontakt zur Aufnahme eines Computeradapters (800) für eine Steuerung der Funktionen des in den Wechselschacht (118) einsetzbaren TV-Moduls (200).

38. Tragbarer Computer nach Anspruch 37, wobei der Computeradapter (800) einen Funkempfänger zum Empfang von Daten von der Fernbedienung (700) umfasst.

39. Tragbarer Computer nach einem der Ansprüche 36 bis 38 mit einer Fernbedieneinheit (700) zur Steuerung des Computers und der Funktionen des einsetzbaren TV-Moduls (200).

40. Tragbarer Computer nach Anspruch 39, wobei die Fernbedienung (700) über eine Mehr-Wege-Navigationstaste (733), insbesondere eine 8-Wege-Navigatinstaste, die Steuerung eines Maus-Cursors ermöglicht.
